# FASCICULE DE BREVET EUROPEEN

(11) **EP 2 332 293 B1**
(45) Date de publication et mention de la délivrance du brevet: **26.04.2017**
(21) Numéro de dépôt: 09784461.7
(22) Date de dépôt: 03.07.2009
(51) Int. Cl.: H04L 12/70

(54) **DISTRIBUTION DE ROUTES DANS UN RÉSEAU DE ROUTEURS**
VERTEILUNG VON ROUTEN IN EINEM NETZWERK VON ROUTERN
DISTRIBUTION OF ROUTES IN A NETWORK OF ROUTERS

(30) Priorité: 23.07.2008 FR 0855031
(43) Date de publication de la demande: 15.06.2011
(73) Titulaire: Orange, 75015 Paris (FR)
(72) Inventeur: BUOB, Marc-Olivier, F-92130 Issy Les Moulineaux (FR); DECRAENE, Bruno, F-92170 Vanves (FR)
(74) Mandataire: Cabinet Plasseraud
(86) Numéro de dépôt international: PCT/FR2009/051300
(87) Numéro de publication internationale: WO 2010/010265

(56) Documents cités:
- EP-A- 1 580 940
- US-A1- 2006 153 200
- CHEN CISCO SYSTEMS Y REKHTER JUNIPER NETWORKS E: "Outbound Route Filtering Capability for BGP-4; draft-ietf-idr-route-filter-16.txt" IETF STANDARD-WORKING-DRAFT, INTERNET ENGINEERING TASK FORCE, IETF, CH, vol. idr, no. 16, 1 septembre 2006 (2006-09-01), XP015046741 ISSN: 0000-0004

## Description

La présente invention est relative au domaine des télécommunications, et plus particulièrement des protocoles de routage et des équipements de réseau mettant en oeuvre de tels protocoles.

Un réseau de télécommunication classique comprend des équipements de réseau, appelés routeurs, ayant pour fonction d'assurer la transmission des paquets. La transmission d'un paquet depuis un équipement jusqu'à un autre équipement dans le réseau peut généralement être réalisée suivant plusieurs chemins. Dans un tel contexte, les routeurs sélectionnent, suivant des critères déterminés, le meilleur chemin de transmission parmi différents chemins de transmission possibles. Un routeur sélectionne ainsi un chemin de transmission sur la base d'informations qui sont généralement reçues selon un protocole de routage et mémorisées dans des tables de routage.

Un protocole de routage fournit des mécanismes aux routeurs d'un réseau permettant de partager des informations de routage entre eux via des sessions spécifiques au protocole de routage et, de ce fait, permettant de construire des tables de routage cohérentes entre elles.

Il existe plusieurs protocoles de routage dont des exemples sont donnés dans EP 1 580 940 A ou dans « Outbound Route Filtering Capability for BGP-4 » de Chen et Rekhter.

Un protocole de routage nommé BGP (« Border Gateway Protocol ») assure une cohésion du routage Internet. Il est défini par l'IETF, pour 'Internet Engineering Task Force'.

Un réseau Internet est constitué d'un ensemble de réseaux autonomes ou encore systèmes autonomes, AS (pour 'Autonomous Systems' en anglais) qui sont connectés entre eux. Un réseau autonome est un ensemble de routeurs fonctionnant sous une seule administration technique, utilisant un protocole de routage intérieur de type IGP (pour 'Interior Gateway Protocol'), tel que par exemple IS-IS (pour 'Intermediate System to Intermediate System' en anglais) ou le protocole OSPF (pour 'Open Shortest Path First' en anglais) et des informations de routage communes pour router les paquets à l'intérieur du
système autonome. De tels routeurs utilisent par ailleurs un protocole de routage extérieur, tel que par exemple le protocole BGP-4 dans l'Internet, pour
router les paquets vers les autres systèmes autonomes. Ainsi, deux routeurs d'un même AS peuvent échanger des informations de routage via des sessions selon le protocole BGP4, appelé dans ce cas iBGP, et des routeurs de deux AS respectifs distincts peuvent échanger des informations de routage via des sessions selon le protocole BGP4, appelé dans ce cas eBGP.

Les échanges d'information effectués via des sessions selon le protocole BGP permettent d'obtenir au niveau de chaque routeur d'un AS des informations sur l'ensemble des routeurs de bordure, ou encore routeurs de sortie, par lesquels le trafic peut sortir de l'AS vers une destination externe à l'AS. Le protocole BGP cherche ensuite à associer le meilleur routeur de sortie possible à chaque routeur du réseau. Toutefois, il est à noter qu'en pratique, il n'est pas toujours en mesure de connaître le meilleur routeur de sortie.

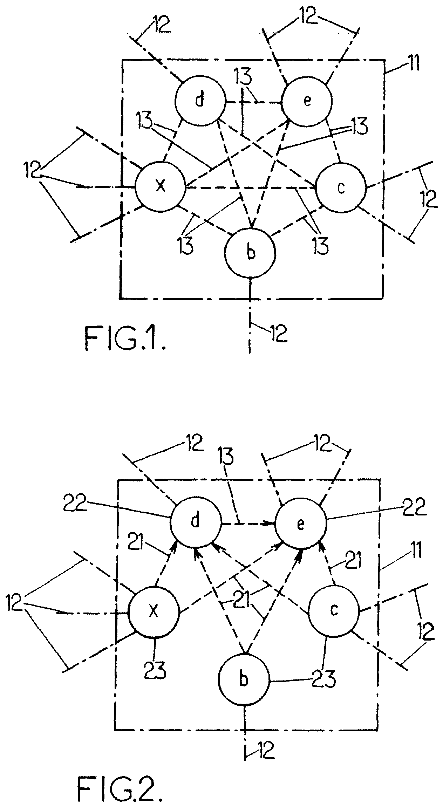

Pour mettre en oeuvre de tels échanges d'informations selon BGP au sein d'un AS, on peut construire dans un AS une topologie « iBGP full mesh », telle qu'elle est définie dans le RFC 4271 (pour 'Request For Comment' en anglais). Dans ce cas, chaque routeur d'un même AS établit une session iBGP avec chaque autre routeur de l'AS. L'ensemble des routeurs de l'AS est donc entièrement maillé de sessions iBGP. La figure 1 illustre une telle implémentation de BGP au sein d'un AS 11 dans lequel chaque routeur x, b, c, d et e est relié avec tous les autres via des sessions iBGP respectives 13, ces routeurs x-e étant par ailleurs reliés via des sessions eBGP 12 à d'autres routeurs situés au sein d'autres AS.

Pour un AS comprenant un nombre N de routeurs, chaque routeur établit (N-1) sessions iBGP et l'AS comprend un nombre total de N*(N-1)/2 sessions iBGP. Un tel mode d'implémentation implique que le nombre de sessions augmente très rapidement avec le nombre de routeurs BGP présents dans l'AS, puisque ce nombre de sessions est fonction du nombre de routeurs au carré. En outre, la configuration d'un nouveau routeur dans l'AS impose la configuration de chacun des routeurs de l'AS, ce qui peut être complexe et lourd à administrer. De plus un routeur ne peut établir qu'un nombre limité de sessions BGP.

Selon une autre implémentation dite 'iBGP Route Reflector' telle que
définie dans le document RFC 4456, il est prévu de centraliser la distribution iBGP des routes sur des routeurs spécifiques référencés en tant que RR (pour 'Route Réflector' en anglais). Ici, chaque routeur de l'AS établit une session iBGP avec un RR, ou de préférence deux RR afin de se protéger contre une panne éventuelle d'un RR. La fonction RR peut également être répartie sur plusieurs routeurs. La figure 2 illustre une telle implémentation. L'AS 11 comprend les routeurs x, b-e. On distingue des routeurs 22 de type "Route Reflector" et des routeurs 23 de type "client". Les sessions selon le protocole iBGP 21 sont alors établies entre chaque routeur RR et ses routeurs clients. Contrairement à un routeur iBGP classique, un RR peut rediffuser des routes iBGP. Il peut ainsi rediffuser:
- les routes iBGP qu'il apprend par ses routeurs clients ; et
- les routes apprises par iBGP à ses routeurs clients.

Enfin, un RR peut être également routeur client d'un autre RR et former ainsi une hiérarchie de RR.

Mais dans le contexte de cette dernière implémentation, le choix des routeurs spécifiques RR dans l'AS n'est pas aisé et un mauvais choix peut être source d'inconvénients divers comme notamment la création de boucles de routage. En outre, un RR ne sélectionne et ne distribue qu'une seule route, une telle restriction pouvant nuire aux performances du routage BGP.

On peut également prévoir d'implémenter de manière partitionnée, soit une implémentation de type iBGP full mesh comme illustré en figure 1, soit encore une implémentation de type Route Reflector comme illustré en figure 2. A cet effet, on prévoit de partitionner l'AS considéré en une pluralité de sous-AS, référencé en tant que 'confédération BGP', et de mettre en oeuvre une des deux implémentations illustrées en figure 1 et 2 au sein de chaque sous-AS.

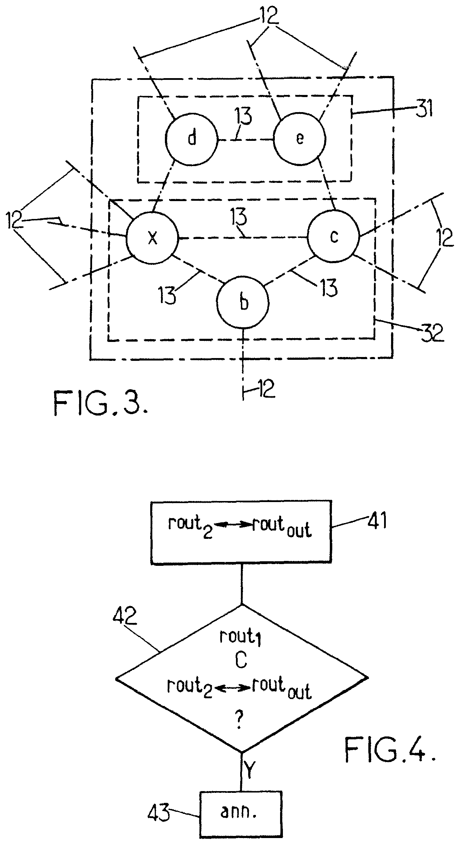

La figure 3 illustre une telle mise en oeuvre de l'implémentation de type 'iBGP full mesh' dans un contexte de partitionnement.

Le système autonome 11 est partitionné en une première confédération 31 comprenant les routeurs d et e, et une seconde confédération 32
comprenant les routeurs x, b et c. Les sessions iBGP 13 sont alors établies de manière 'full mesh' au sein de chaque confédération 31 et 32.

La mise en oeuvre de iBGP full mesh dans un tel contexte de partitionnement permet de limiter l'augmentation rapide du nombre de sessions en fonction du nombre de routeurs, mais ne permet pas de résoudre complètement ce problème. Par ailleurs, l'implémentation de iBGP Route Reflector au sein de sous-AS ne permet pas de résoudre les problèmes attachés à cette mise en oeuvre.

En outre, ce partitionnement requiert de déterminer un nombre de sous AS et d'en définir les frontières, ce qui peut s'avérer être complexe.

La présente invention vise à améliorer la situation.

Un premier aspect de l'invention propose un procédé de diffusion de routes dans un système autonome comprenant une pluralité de routeurs au sein d'un réseau de transmission de paquets ;
des liens respectifs reliant lesdits routeurs selon une topologie de routeurs ; ledit procédé comprenant les étapes suivantes par un premier routeur du système autonome, qui est relié directement suivant ladite topologie considérée à un second routeur, pour une route sortant dudit système autonome par un routeur de sortie :
/a/déterminer un chemin entre le second routeur et le routeur de sortie selon des critères de performance basés sur des informations de la topologie de routeurs, et déterminer si, pour la route considérée, le premier routeur est situé sur ledit chemin entre le second routeur et le routeur de sortie,; et
/b/ annoncer la route audit second routeur si le premier routeur est situé sur ledit chemin déterminé à l'étape /a/.

Grâce à ces dispositions, on est en mesure d'optimiser la diffusion de routes au sein d'un système autonome, ou AS. La distribution ou diffusion d'une route au sein d'un AS est ici avantageusement répartie sur plusieurs routeurs de l'AS, contrairement au cas notamment d'une implémentation 'iBGP Route Reflector' telle que décrite ci-avant.

En outre, dans les conditions d'un mode de réalisation de la présente invention, chaque route n'est avantageusement diffusée qu'une fois, généralement. Tel n'est pas le cas dans une implémentation 'iBGP Route Reflector'. En effet, dans ce type d'implémentation, une même route peut être reçue plusieurs fois par un routeur, engendrant des messages inutiles.

Par ailleurs, le nombre de sessions utilisées pour la diffusion des informations de routage telles que la diffusion des routes dans l'AS, peut avantageusement être inférieur au nombre des sessions utilisées pour la diffusion des routes dans une implémentation de type 'iBGP full mesh' telle que décrite ci-avant. En effet, il convient de noter ici que l'annonce d'une route est effectuée depuis un premier routeur vers un second routeur qui sont reliés selon une topologie préalablement établie entre les différents routeurs de l'AS considéré. De ce fait, un maillage complet entre les routeurs d'un même AS n'est pas requis. Il suffit de prévoir d'établir une session servant à diffuser les routes entre deux routeurs qui sont déjà reliés selon la topologie considérée.

On entend ici par les termes 'topologie de routeurs' l'ensemble des liens reliant les routeurs deux à deux, deux routeurs étant reliés par un lien étant des routeurs voisins.

Ainsi, l'établissement de sessions iBGP de diffusion de routes peut être avantageusement calé sur les liens déjà définis entre les routeurs selon la topologie de routeurs considérée, chaque routeur connaissant ses routeurs voisins, c'est-à-dire les routeurs avec lesquels il est relié par un lien de la topologie.

Cette caractéristique permet de résoudre des difficultés d'ingénierie, comme énoncées ci-avant, qui sont inhérentes à la mise en oeuvre des mécanismes de réflexion de routes lorsque des routeurs RR sont utilisés, telles que la difficulté d'obtenir une distribution performante des informations de routage, la difficulté de choisir un RR qui convienne dans la topologie de routeurs considérée, et qui permette notamment une résistance aux pannes. Elle permet également de garantir que lorsque le réseau considéré est connexe, il existe un chemin de signalisation des routes iBGP. Plus précisément, chaque routeur a toujours connaissance de la meilleure route potentielle.

En outre, le problème d'augmentation rapide du nombre de sessions avec le nombre de routeurs BGP présents dans l'AS dans une topologie « iBGP full mesh », est ici avantageusement écarté.

Dans ces conditions, avantageusement, la diffusion des routes iBGP
au sein du réseau suit un chemin optimal entre le routeur de bordure annonçant la route en iBGP dans l'AS et le routeur utilisant cette route, puisque cette diffusion est basée sur la topologie de routeurs du réseau.

On peut prévoir que la topologie de routeurs considérée ici est issue d'une configuration quelconque, par exemple par configuration d'une liste des liens sur lesquels on souhaite activer les sessions iBGP. La topologie de routeurs peut encore être issue de la mise en oeuvre d'un protocole de routage de type IGP de type link state, c'est-à-dire IGP à état de lien qui permet une découverte et diffusion automatique et dynamique de la topologie de routeurs.

Dans ce dernier cas, le chemin optimal est défini au sens d'un protocole de routage de type IGP et est calculé grâce à la topologie du réseau déjà annoncée par l'IGP. Cet IGP de type état de lien est en général déjà utilisé dans les réseaux pour calculer des chemins entre deux routeurs internes à l'AS. Il permet notamment de recalculer efficacement les routages, dans le cas de modification de topologie comme la déconnexion d'un lien physique, ou dans le cas encore de l'arrêt d'un des routeurs de l'AS.

En se calant sur une telle topologie de routeurs pour la diffusion de routes iBGP, on peut bénéficier de ces avantages-là. Dans ces conditions, un changement de topologie tel que ajout ou suppression de routeurs et/ou de liens, ou encore modifications de métriques, est aisé à gérer puisque les sessions de diffusion de routes sont établies sur la base de la topologie de routeurs, qui peut être obtenue par mise en oeuvre du protocole de routage IGP considéré. On peut ainsi obtenir un routage qui résiste aux diverses pannes pouvant affecter le système autonome, et quelque soit le scénario de panne, on converge à nouveau vers un routage optimal.

En outre, l'étape /a/ est effectuée sur la base d'informations de la topologie de routeurs. En effet, on peut prévoir que le premier routeur dispose de la topologie du réseau et se base dessus pour déterminer un chemin performant au regard de certains critères de performance, comme par exemple le chemin le plus court.

Des sessions de diffusion sont établies entre les routeurs et l'étape /b/ est effectuée via la session de diffusion de routes établie entre les premier et
second routeurs.

Ainsi, il est donc prévu d'établir des sessions de diffusion de route en se calant sur les liens entre les routeurs définis par la topologie de routeurs, aucune limitation n'étant attachée au type de session de diffusion de routes.

Chaque routeur établit une session avec ses routeurs voisins de l'AS, c'est-à-dire avec les routeurs auxquels il est relié par un lien de la topologie. Un routeur n'a pas besoin de connaître la topologie complète du réseau considéré ; il a uniquement besoin de savoir si ces voisins le traverse pour joindre un point de sortie. Ainsi on peut étendre le domaine d'application de la présente invention à des IGP à vecteur de chemin, comme par exemple RIP.

Les sessions de diffusion peuvent notamment être de type iBGP ou encore de type MP-iBGP (pour 'Multi Protocol Border Gateway Protocol' en anglais). MP-iBGP correspond à une extension du protocole iBGP qui permet aux systèmes autonomes de s'échanger des informations étendues telles que des routes MPLS-VPN (pour 'MultiProtocol Label Switching Virtual Private Network'), ou encore de type Multicast, ou bien IPv6.

Dans un mode de réalisation, on prévoit donc d'établir des sessions de diffusion de routes selon un autre protocole de routage entre les routeurs qui sont reliés selon la topologie considérée, et d'effectuer l'étape /b/ via la session de diffusion établie entre les premier et second routeurs.

En procédant ainsi, les sessions de diffusion de routes sont établies en suivant la topologie du réseau considéré, avec les routeurs voisins de chaque routeur. Ainsi, les sessions de diffusion de routes sont établies uniquement entre deux routeurs qui sont voisins au sens de la topologie de routeurs, qui peut être obtenue par un protocole de routage IGP. De telles conditions permettent à la fois de simplifier, voire d'automatiser, la localisation des sessions iBGP tout en garantissant un routage BGP optimal contrairement à une implémentation de type 'iBGP RR', et de réduire le nombre de sessions de diffusion de routes par rapport à une implémentation de type 'iBGP full mesh', principalement lorsque le nombre de routeurs de l'AS considéré est élevé. De plus, il est à noter que dans la plupart des cas, une route n'est reçue qu'une seule fois, contrairement à une implémentation 'iBGP RR'.

Avantageusement, les étapes du procédé peuvent être appliquées
successivement à chacun des routeurs de la pluralité de routeurs, chacun de ces routeurs pouvant être considéré à son tour en tant que premier routeur. La diffusion de routes peut alors être faite dans tout l'AS.

En outre, il apparait avantageux de mettre en oeuvre les étapes /a/ et /b/ au niveau du premier routeur pour tous les routeurs qui lui sont voisins, c'est-à-dire pour tous les routeurs qui lui sont reliés directement suivant la topologie considérée. Ces étapes peuvent donc être effectuées successivement pour chacun des seconds routeurs reliés au premier routeur selon la topologie.

Dans un mode de réalisation de la présente invention, les critères de performance sont adaptés pour sélectionner le chemin le plus court entre le second routeur et le routeur de sortie. Le protocole de routage IGP permet de déterminer de tels plus courts chemins au sein de la topologie de l'AS obtenue.

La topologie de routeurs et des couts respectifs des liens entre les routeurs sont obtenus selon le protocole IGP à état de lien.

Toutefois, aucune limitation du type de critères de performance n'est attachée à la mise en oeuvre de l'étape /a/ du procédé de diffusion de routes.

Un deuxième aspect de la présente invention propose un routeur selon la revendication 8.

Un troisième aspect de la présente invention propose un système autonome comprenant une pluralité de routeurs tels que définis ci-dessus.

Un quatrième aspect de la présente invention propose un programme d'ordinateur comportant des instructions pour la mise en oeuvre du procédé tel que défini ci-dessus lorsque ce programme est exécuté par un processeur.

D'autres aspects, buts et avantages de l'invention apparaîtront à la lecture de la description d'un de ses modes de réalisation.

L'invention sera également mieux comprise à l'aide des dessins, sur lesquels :
- les figures 1, 2 et 3 illustrent trois implémentations différentes de mise en oeuvre du protocole BGP dans un système de routeurs selon l'art antérieur ;
- la figure 4 illustre les principales étapes d'un procédé de diffusion de routes selon un mode de réalisation de l'invention ;
- les figures 5, 6 et 7 illustrent la mise en ouvre d'un procédé de diffusion de routes dans un réseau selon un mode de réalisation de la présente invention pour différents routes ;
- la figure 8 illustre un routeur selon un mode de réalisation de la présente invention.

Par la suite, la présente invention est décrite dans le cas où la topologie de routeurs utilisée est obtenue par mise en oeuvre d'un protocole de routage de type IGP à état de lien. Toutefois, aucune limitation n'est attachée au mécanisme d'obtention de la topologie de routeurs utilisée.

La figure 4 illustre les principales étapes d'un procédé de diffusion de routes selon un mode de réalisation de la présente invention, dans un système autonome comprenant une pluralité de routeurs au sein d'un réseau de transmission de paquets. On peut prévoir, dans un mode de réalisation, que de manière préalable un protocole de routage à état de lien, de type IGP, est mis en oeuvre au sein du système autonome considéré. Une topologie du système autonome considéré est alors obtenue.

Cette étape peut ne pas être mise en oeuvre, et on peut alors prévoir que la topologie de routeurs, c'est-à-dire l'ensemble des liens reliant les routeurs du réseau entre eux, soit obtenue par configuration.

La présente invention couvre toutes les méthodes permettant d'obtenir une topologie de routeurs dans un réseau.

Cette topologie relie certains routeurs de ce système autonome entre eux et de ce fait permet de définir pour un routeur donné un ou plusieurs routeurs voisins, les routeurs voisins étant reliés au routeur donné par des liens directs suivant la topologie considérée.

Dans un mode de réalisation de la présente invention il est prévu de prendre en considération successivement les différents routeurs du système autonome considéré et de leur appliquer les étapes suivantes, pour tous les routeurs voisins au sens de la topologie considérée.

Pour appliquer les étapes du procédé selon un mode de réalisation de la présente invention, on prend en considération un premier routeur rout₁ parmi les routeurs du système autonome. Puis, suivant la topologie considérée, on détermine un routeur voisin de ce premier routeur, référencé par la suite en tant que second routeur rout₂. On considère en outre une route de sortie du système autonome par un routeur de sortie routₒᵤₜ.

Ainsi, au niveau du premier routeur, les étapes suivantes sont appliquées pour le second routeur et pour la route sortant du système autonome.

En premier lieu, à une étape 41, on détermine un chemin performant entre le second routeur et le routeur de sortie selon des critères de performance.

Il convient de noter que de tels critères de performance peuvent correspondre à une détermination du chemin le plus court au sens IGP entre le second routeur et le routeur de sortie. Dans ce cas, le premier routeur dispose d'informations qui lui permettent de calculer lui-même le plus court chemin entre ces deux routeurs.

Puis, à une étape 42, le premier routeur détermine s'il est lui-même situé sur ce chemin performant entre le second routeur, c'est-à-dire son routeur voisin, et le routeur de sortie pour la route considérée.

Si tel est le cas, à une étape 43, le premier routeur annonce cette route de sortie à son routeur voisin rout₂. Dans le cas contraire, le premier routeur n'annonce pas cette route de sortie, contrairement à une implémentation selon 'iBGP'.

Dans une variante de réalisation, le premier routeur annonce cette route à son routeur voisin rout₂, si et seulement si le premier routeur est le successeur du routeur rout₂ sur le chemin performant de rout₂ à routₒᵤₜ.

Il est avantageusement prévu d'effectuer ces étapes 41 à 43 au niveau de ce même premier routeur pour tous les routeurs qui sont ses voisins au sens de la topologie considérée, ainsi que pour toutes routes de sortie du système autonome considéré. Puis, avantageusement on peut appliquer ce procédé à tous les routeurs du système autonome de sorte à diffuser de manière performante les routes dans tout le système autonome.

Il convient donc de noter qu'une session de diffusion de routes selon un mode de réalisation de la présente invention est établie avantageusement entre tous les routeurs voisins au sens de la topologie considérée, telle que par exemple une topologie IGP.

En utilisant la topologie IGP du système autonome, on garantit qu'on évite les boucles de routage et que l'état vers lequel le réseau va converger est optimal. En cas de modification de topologie comme la déconnexion d'un lien physique, ou encore l'arrêt d'un des routeurs de l'AS, on garantit que le nouvel état est de nouveau optimal.

Aucune limitation n'est attachée au type de protocole de routage permettant de fournir une topologie d'un système autonome au regard de la présente invention.

On peut par exemple prévoir d'utiliser un protocole IGP de type 'à état de lien (ou 'link state" en anglais). Ici, chaque routeur annonce aux autres routeurs de l'AS une partie de la topologie de l'AS dont il a eu connaissance de manière directe, c'est-à-dire ses propres préfixes, la liste de ses voisins et des valeurs de coût respectivement associées aux voisins. Sur la base de ces annonces de chemins IGP au sein de l'AS, chaque routeur peut déduire une topologie IGP de cet AS, et calculer les plus courts chemins d'un routeur quelconque de l'AS vers l'ensemble des routeurs de l'AS, notamment en mettant en oeuvre un algorithme de type Dijkstra.

Dans un mode de réalisation de la présente invention, chaque routeur établit une session iBGP avec chacun des autres routeurs voisins du même AS, c'est-à-dire avec lequel il est relié directement par un lien IGP.

On peut prévoir que la manière d'annoncer une route par un routeur selon un mode de réalisation de la présente invention à un routeur voisin soit indifférente de la façon dont il a appris lui-même ces routes. Ainsi, par exemple, si ce premier routeur x appris une route via une session de type eBGP, il peut l'annoncer à une étape 43 selon le procédé de diffusion de routes comme décrit dans la norme BGP, et plus précisément le RFC 4271 (pour 'Request For Comment' en anglais).

Dans le cas où la route est annoncée pour la première fois selon le protocole iBGP, le premier routeur peut l'annoncer à une étape 43 comme décrit dans la norme BGP Route Reflector, et plus précisément le RFC 4456.

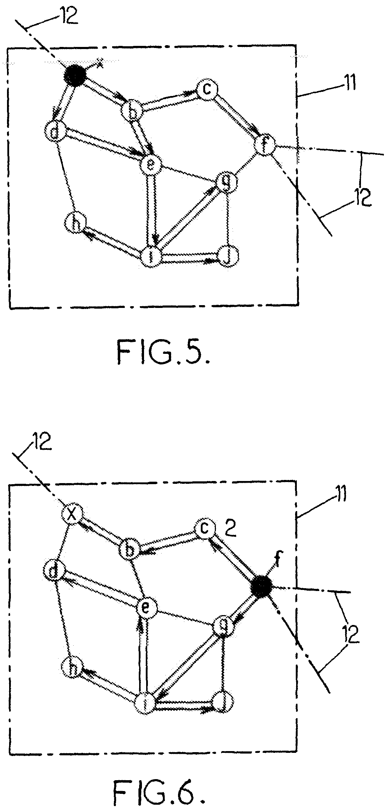

La figure 5 illustre une telle mise en oeuvre dans un réseau selon un mode de réalisation de la présente invention. Un tel réseau illustré à la figure 5 comprend un AS 11 qui inclut des routeurs x, b-j. Les liens qui sont illustrés en trait continu et non fléché correspondent aux liens IGP qui relient les routeurs de cet AS entre eux, selon la topologie considérée. Ces traits continus correspondent également aux sessions de diffusion de routes selon un mode de réalisation de la présente invention. Les traits fléchés eux représentent la diffusion en elle-même selon le sens de la flèche, à l'étape 43, d'une route depuis un routeur vers un routeur voisin selon le procédé de diffusion de routes d'un mode de réalisation.

Dans la topologie considérée, les liens IGP entre deux routeurs sont pondérés de sorte à permettre un calcul de chemin le plus court :
- les liens x-b, x-d, d-e, b-e, b-c, e-i, i-h, i-j, i-g et g-f sont affectés du poids 1 ;
- le lien c-f est affecté du poids 2 ;
- le lien d-h est affecté du poids 4 ; et
- les liens e-g et g-j sont affectés du poids 9.

Il convient de noter ici que les métriques associées aux liens peuvent être dissymétriques selon la direction du lien. Par exemple, la métrique associée au lien |x,b| peut différer de la métrique associée au lien |b,x|.

La diffusion de routes illustrée à la figure 5 est relative à la ou les route(s) sortant de l'AS 11 par le routeur de sortie routₒᵤₜ x, ou encore 'next hop BGP' x.

Dans un mode de réalisation de la présente invention, les routes BGP pour lesquelles le routeur x est le routeur de sortie, sont diffusées comme suit.

Chaque routeur de cet AS calcule pour tous ses routeurs voisins le plus court chemin pour joindre le routeur x en tant que 'next hop' de la route BGP, ou encore en tant que routeur de sortie de la route considérée.

Ainsi, par exemple, le routeur x détermine le plus court chemin pour le joindre lui en tant que routeur de sortie, à partir du routeur b et du routeur d.

Depuis le routeur b, le prochain routeur pour atteindre le routeur x est le routeur x lui-même. Par conséquent, le routeur x annonce au routeur b les routes BGP ayant x comme routeur de sortie.

Il en est de même pour le routeur d. En effet, depuis le routeur d, le prochain routeur pour atteindre le routeur x est le routeur x lui-même. Par conséquent, le routeur x annonce au routeur d les routes BGP ayant x comme next hop ou routeur de sortie.

Une fois que le procédé de diffusion de routes a été appliqué au routeur x pour tous ses routeurs voisins, on peut passer au routeur b.

Ainsi, de la même manière, le routeur b calcule pour chacun de ses voisins c'est-à-dire ici les routeurs e, c et x leur plus court chemin pour joindre le routeur de sortie x des routes BGP.

A partir du routeur c, le prochain routeur voisin utilisé pour joindre le routeur de sortie x est b, donc le routeur b annonce au routeur c les routes BGP ayant comme next-hop le routeur x.

Le même principe s'applique aisément au routeur voisin e.

Par contre, le routeur x en tant que voisin du routeur b ne répond pas aux mêmes critères puisque le plus court chemin entre le routeur x en tant voisin du routeur b et le routeur de sortie x, au sens de la topologie présentée, ne passe par le routeur b. Par conséquent, b n'annonce pas, ou ne diffuse pas, les routes BGP au routeur voisin x.

De la même manière, le routeur e calcule pour chacun de ses voisins b, d, g et i les plus courts chemins respectifs pour joindre le next-hop x des routes BGP.

A partir du routeur voisin b, le plus court chemin pour joindre le next-hop x passe par x en tant que prochain bond, sans passer par e, donc les routes BGP ayant comme next hop x ne sont pas annoncées au routeur b.

A partir du routeur voisin d, le plus court chemin pour joindre le next-hop x passe par le routeur x en tant que prochain bond et sans passer par le routeur e, donc les routes BGP ne sont pas annoncées au routeur d.

A partir du routeur voisin g, le prochain routeur sur le plus court chemin pour joindre le next-hop x est le routeur i et donc ce n'est pas le routeur e. Par conséquent, le routeur e n'annonce pas les routes BGP au routeur g.

A partir du routeur i, le prochain routeur pour joindre le next-hop x est le routeur e. Le routeur e annonce donc les routes BGP ayant pour routeur de sortie le routeur x, au routeur g.

Ainsi, de proche en proche, les routes BGP ayant comme next-hop x se diffusent au sein de l'AS selon le graphe illustré par les traits continus fléchés en figure 5.

La figure 6 illustre un graphe de diffusion des routes BGP ayant comme routeur de sortie le routeur f dans le même AS 11 que celui illustré à la figure 5.

Dans ces conditions, les routes BGP ayant pour routeur de sortie le routeur f sont diffusées :
- par le routeur f aux routeurs c et g ;
- par le routeur c au routeur b ;
- par le routeur b au routeur x ;
- par le routeur g au routeur i ;
- par le routeur i aux routeurs h et e ; et
- par le routeur e au routeur d.

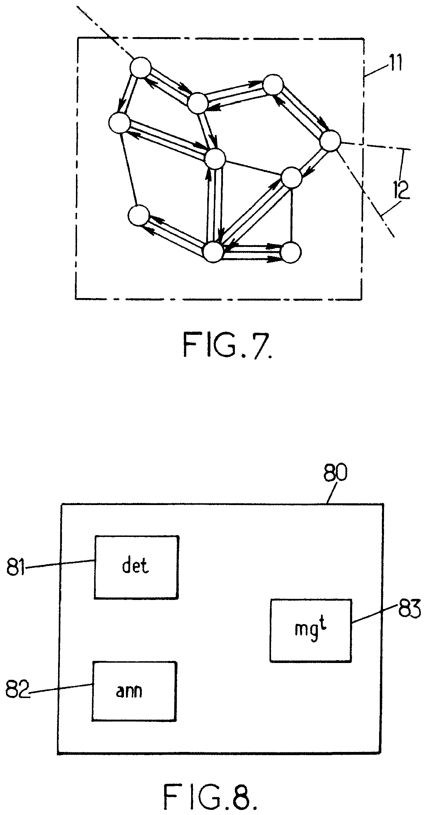

La figure 7 illustre les graphes de diffusion simultanée de routes BGP ayant respectivement comme next hop le routeur x et le routeur f, selon un mode de réalisation de la présente invention.

Grâce aux dispositions de la présente invention, dans ce contexte là, la diffusion d'une route est effectuée de manière à ce que chaque routeur utilise le routeur de sortie le plus proche. On obtient ainsi une diffusion de route performante et réalisée selon le chemin le plus court pour chaque routeur de l'AS.

Dans un mode de réalisation de la présente invention, lorsqu'un lien de type IGP entre deux routeurs tombe, il est prévu que la session de diffusion de route correspondante ne tombe pas immédiatement après la chute du lien IGP.

En maintenant la session de diffusion de route quelques instants, alors même que le lien IGP correspondant a disparu, on est en mesure d'attendre une convergence de la diffusion de route selon un mode de réalisation de la présente invention selon un nouveau chemin. Ce nouveau chemin est issu de la convergence du protocole de routage, tel que le protocole IGP, qui permet d'obtenir la topologie sur la base de laquelle la diffusion de routes est réalisée.

Il peut être également avantageux de préciser dans un message de type BGP, et plus précisément au niveau par exemple d'un code d'erreur, que la chute de cette session de diffusion de routes est volontaire, et de ce fait 'normale', dans le sens où elle n'est pas due à un problème BGP.

La figure 8 illustre un routeur selon un mode de réalisation de la présente invention.

Un routeur 80 est relié par un lien, selon la topologie de routeurs considérée, à un autre routeur.

Ce routeur 80 comprend :
- une unité de détermination 81 adaptée pour déterminer, pour un routeur de sortie, si le routeur appartient à un chemin entre cet autre routeur et le routeur de sortie, ledit chemin correspondant à des critères de performance; et
- une unité de diffusion 82 'ann' (pour 'annonce') adaptée pour annoncer la route audit autre routeur si le routeur est situé sur le chemin déterminé par l'unité de détermination.

Il peut en outre comprendre une unité de gestion 83 'mgt' (pour 'management' en anglais) de session de diffusion de routes adaptée pour établir des sessions de diffusion de routes selon un autre protocole de routage avec les routeurs qui lui sont reliés selon la topologie.

L'unité de gestion de session 83 peut en outre être adaptée pour gérer les sessions de diffusion de routes suivant des modifications de la topologie de routeurs.

En cas de panne simple, il est possible qu'une déflexion positive apparaisse durant la convergence des sessions de diffusion de routes selon un mode de réalisation de la présente invention, mais aucune boucle de routage n'apparait.

Les conséquences de la panne d'un routeur sont similaires à celles de la chute d'un lien IGP et sont exposées ci-avant.

Dans un mode de réalisation de la présente invention, un changement de la topologie IGP du système autonome implique un aménagement correspondant au niveau des sessions de diffusion de routes.

Par la suite, un tel aménagement est décrit lors de l'apparition d'un nouveau lien IGP entre deux routeurs x et b dans la topologie IGP utilisée pour la mise en oeuvre de la présente invention. Un nouveau lien IGP entraine de préférence l'établissement d'une nouvelle session de diffusion de routes, puis un nouveau calcul de chemin le plus court pour les voisins et une prise de décision de diffusion des routes ou non, selon le procédé décrit ici.

Il convient de prendre en compte le délai d'établissement de cette nouvelle session de diffusion de routes avant de procéder aux annonces de routes relatives à l'étape 43 de ce procédé de diffusion de routes. On peut à cet effet prévoir que les anciens routeurs voisins du routeur x attendent l'expiration d'un temporisateur avant d'effectuer un calcul de plus courts chemins pour leurs routeurs voisins respectifs selon un mode de réalisation de la présente invention.

De manière générale, suite à un changement de topologie de type IGP, il n'y a pas d'urgence à supprimer les sessions de diffusion de routes devenues obsolètes.

Il est possible que par rapport à une topologie IGP donnée, un nouveau routeur apparaisse, ou réapparaisse suite à une panne. Dans ce cas, comme l'état de l'art actuel, il est avantageux de diffuser les routes BGP rapidement à ce nouveau routeur. A cet effet, ce nouveau routeur met en oeuvre les étapes du procédé de diffusion de routes selon un mode de réalisation de la présente invention. Les routeurs déjà présents dans la topologie considérée, peuvent avantageusement établir une session de diffusion de routes avec ce nouveau routeur, si ce dernier est leur routeur voisin au sens de la topologie de type IGP.

Un avantage supplémentaire de cette invention est que, dans le cas où la session iBGP n'est pas encore établie, comme les sessions iBGP suivent la même topologie que les sessions IGP, dans un mode de réalisation, on peut prévoir d'annoncer dans le contexte protocolaire de type IGP, la topologie des sessions de diffusion de routes pour pouvoir détecter une différence de topologie entre les sessions de diffusion de routes et les liens IGP. Par exemple, on peut annoncer ce contexte protocolaire de type IGP de la même manière qu'un protocole de type LDP (pour 'Label Distribution Protocol' en anglais) le fait, comme cela est décrit dans le document draft-ietf-mpls-Idp-igp-sync-01.txt "LDP IGP Synchronization".

Avantageusement, il convient de noter que la mise en oeuvre d'un procédé de diffusion de routes selon un mode de réalisation de la présente invention ne nécessite pas de modification des messages BGP échangés entre les routeurs d'un AS. Simplement certaines réactions du protocole BGP existant sont à adapter.

En effet, la ré-émission des messages BGP s'appuie sur le protocole BGP et sur le protocole BGP RR qui sont déjà supportés pour les routeurs BGP.

Un calcul de type IGP SPF est également déjà prévu dans les routeurs existants.

Le filtrage des routes BGP lors de l'émission sur une session BGP est déjà défini au sein de la norme BGP et réutilisé dans la norme BGP RT (pour 'Route Target'), tel que cela est défini dans le document RFC 4684. Dans cette variante, les routes BGP sont diffusées conformément aux politiques de routage définies par les voisins.

Ici, il peut être prévu qu'un routeur donné calcule, en plus des plus courts chemins partant de lui, les plus courts chemins partant de ses voisins. On tire parti du fait que les plus courts chemins IGP sont rapidement calculés et que de plus ils ne retardent pas la convergence IGP lors d'une panne dans le réseau puisque les calculs effectués au niveau du protocole iBGP sont considérés comme moins prioritaires. Par conséquent, ils ne retardent aucun traitement ou réaction dans un tel AS. Si pour d'autres raisons, de tels calculs sont déjà mis en oeuvre, alors aucun calcul supplémentaire n'est requis.

La description a été réalisée dans le cas particulier d'un protocole de type 'Link state' ou à état de lien. Il est à noter qu'on peut également utiliser un protocole de type "distance vector", dans lequel pour chaque destination, le second routeur rout₂ annonce au premier routeur rout₁ si le premier routeur est sur le chemin de cette destination. Ainsi à l'étape 41, on détermine un chemin performant entre le second routeur et le routeur de sortie selon des critères de performance en fonction de ces annonces. Il est ici souligné que pour un tel protocole de type "distance vector" déterminer un chemin performant consiste à déterminer un routeur prochain saut ou "next-hop" performant.

## Revendications

1. Procédé de diffusion de routes dans un système autonome comprenant une pluralité de routeurs au sein d'un réseau de transmission de paquets ;
ainsi que des liens respectifs reliant lesdits routeurs selon une topologie de routeurs ; ledit procédé comprenant les étapes suivantes par un premier routeur (rout₁) du système autonome qui est relié directement suivant ladite topologie considérée à un second routeur (rout₂), pour une route sortant dudit système autonome par un routeur de sortie (routₒᵤₜ) :
/a/ déterminer (41) un chemin entre le second routeur et le routeur de sortie selon des critères de performance basés sur des informations de la topologie de routeurs, et déterminer (42) si, pour la route considérée, le premier routeur est situé sur ledit chemin entre le second routeur et le routeur de sortie, et /b/ annoncer (43) la route audit second routeur si le premier routeur est situé sur ledit chemin déterminé à l'étape /a/.

2. Procédé de diffusion de routes selon la revendication 1, dans lequel des sessions de diffusion de routes sont établies entre les routeurs ; et dans lequel l'étape /b/ est effectuée via la session de diffusion de routes établie entre les premier et second routeurs.

3. Procédé de diffusion de routes selon la revendication 1, dans lequel, les étapes /a/ et /b/ sont effectuées lorsque la topologie de routeurs est modifiée.

4. Procédé de diffusion de routes selon la revendication 1, dans lequel les étapes /a/ et /b/ sont effectuées successivement pour chacun des seconds routeurs reliés au premier routeur selon la topologie de routeurs.

5. Procédé de diffusion de routes selon la revendication 1, dans lequel les étapes /a/ et /b/ sont appliquées successivement à chacun des routeurs de la pluralité de routeurs, considéré en tant que premier routeur.

6. Procédé de diffusion de routes selon la revendication 1, dans lequel les critères de performance sont adaptés pour sélectionner le chemin le plus court entre le second routeur et le routeur de sortie.

7. Procédé de diffusion de routes selon la revendication 1, dans lequel la topologie de routeurs et des coûts respectifs des liens entre les routeurs sont obtenus selon le protocole IGP (pour 'Interior Gateway Protocol') à état de lien.

8. Routeur (80) dans un système autonome comprenant une pluralité de routeurs au sein d'un réseau de transmission de paquets ainsi qu'une route sortant dudit système autonome par un routeur de sortie ;
ledit routeur étant relié directement avec un second routeur par un lien direct selon une topologie de routeurs ;
ledit routeur (80) comprenant :
- une unité de détermination (81) adaptée pour déterminer, pour ledit routeur de sortie, si ledit routeur (80) appartient à un chemin entre ledit autre routeur et ledit routeur de sortie, ledit chemin étant déterminé par ledit routeur (80) selon des critères de performance basés sur des informations de la topologie de routeurs, et
- une unité de diffusion (82) adaptée pour annoncer la route audit autre routeur si ledit routeur (80) est situé sur le chemin déterminé par l'unité de détermination.

9. Routeur selon la revendication 8 comprenant en outre :
- une unité de gestion de session de diffusion de routes (83) adaptée pour établir des sessions de diffusion de routes selon un protocole de routage avec les routeurs qui lui sont reliés selon la topologie de routeurs.

10. Routeur selon la revendication 9, dans lequel l'unité de gestion de session de diffusion de routes (83) est en outre adaptée pour gérer les sessions de diffusion de routes suivant des modifications de la topologie de routeurs.

11. Système autonome comprenant une pluralité de routeurs au sein d'un réseau de transmission de paquets ; lesdits routeurs étant des routeurs selon la revendication 8.

12. Programme d'ordinateur comportant des instructions pour la mise en oeuvre du procédé selon la revendication 1 lorsque ce programme est exécuté par un processeur.

## Patentansprüche

1. Verfahren zum Senden von Routen in einem autonomen System, das mehrere Router in einem Paketübertragungsnetz sowie jeweilige Verbindungen, die die Router gemäß einer Router-Topologie verbinden, umfasst;
wobei das Verfahren die folgenden Schritte umfasst, die für eine Route, die über einen Ausgangs-Router (routₒᵤₜ) das autonome System verlässt, von einem ersten Router (rout₁) des autonomen Systems, der gemäß der betrachteten Topologie direkt mit einem zweiten Router (rout₂) verbunden ist, ausgeführt werden:
/a/ Bestimmen (41) eines Wegs zwischen dem zweiten Router und dem Ausgangsrouter in Übereinstimmung mit Leistungskriterien, die auf Informationen der Router-Topologie beruhen, und Bestimmen (42), ob sich der erste Router für die betrachtete Route auf dem Weg zwischen dem zweiten Router und dem Ausgangsrouter befindet, und
/b/ Melden (43) der Route an den zweiten Router, falls sich der erste Router auf dem im Schritt /a/ bestimmten Weg befindet.

2. Routensendungsverfahren nach Anspruch 1, wobei die Routensendungssitzungen zwischen den Routern aufgebaut werden; wobei der Schritt /b/ über die Routensendungssitzung, die zwischen dem ersten und dem zweiten Router aufgebaut wird, ausgeführt wird.

3. Routensendungsverfahren nach Anspruch 1, wobei die Schritte /a/ und /b/ ausgeführt werden, wenn die Router-Topologie modifiziert wird.

4. Routensendungsverfahren nach Anspruch 1, wobei die Schritte /a/ und /b/ nacheinander für jeden von zweiten Routern, die mit dem ersten Router gemäß der Router-Topologie verbunden sind, ausgeführt werden.

5. Routensendungsverfahren nach Anspruch 1, wobei die Schritte /a/ und /b/ nacheinander auf jeden Router der mehreren Router, der jeweils als erster Router angesehen werden, angewendet wird.

6. Routensendungsverfahren nach Anspruch 1, wobei die Leistungskriterien dafür ausgelegt sind, den kürzesten Weg zwischen dem zweiten Router und dem Ausgangs-Router zu wählen.

7. Routensendungsverfahren nach Anspruch 1, wobei die Router-Topologie und die jeweiligen Kosten der Verbindungen zwischen den Routern gemäß dem Verbindungsstatus IGP-Protokoll (für "Interior Gateway Protocol") erhalten werden.

8. Router (80) in einem autonomen System, das mehrere Router in einem Paketübertragungsnetz sowie eine Ausgangsroute des autonomen Systems durch einen Ausgangs-Router umfasst;
wobei der Router durch eine direkte Verbindung gemäß einer Router-Topologie direkt mit einem zweiten Router verbunden ist;
wobei der Router (80) Folgendes umfasst:
- eine Bestimmungseinheit (81), die dafür ausgelegt ist, für den Ausgangs-Router zu bestimmen, ob der Router (80) zu einem Weg zwischen dem anderen Router und dem Ausgangs-Router gehört, wobei der Weg von dem Router (80) gemäß Leistungskriterien bestimmt wird, die auf Informationen über die Router-Topologie beruhen, und
- eine Sendungseinheit (82), die dafür ausgelegt ist, die Route an den anderen Router zu melden, falls sich der Router (80) auf dem durch die Bestimmungseinheit bestimmten Weg befindet.

9. Router nach Anspruch 8, der außerdem Folgendes umfasst:
- eine Einheit (83) für die Steuerung einer Routensendungssitzung, die dafür ausgelegt ist, Routensendungssitzungen gemäß einem Routing Protokoll mit den Routern, die mit ihr gemäß der Router-Topologie verbunden sind, aufzubauen.

10. Router nach Anspruch 9, wobei die Einheit (83) für die Steuerung von Routensendungssitzungen außerdem dafür ausgelegt ist, die Routensendungssitzungen in Übereinstimmung mit Modifikationen der Router-Topologie zu verwalten.

11. Autonomes System, das mehrere Router in einem Paketübertragungsnetz umfasst; wobei die Router Router nach Anspruch 8 sind.

12. Computerprogramm, das Befehle für die Ausführung des Verfahrens nach Anspruch 1, wenn dieses Programm durch einen Prozessor abgearbeitet wird, umfasst.

## Claims

1. Method for broadcasting routes in an autonomous system comprising a plurality of routers within a packet transmission network;
and respective links connecting said routers according to a router topology;
said method comprising the following steps by a first router (rout₁) of the autonomous system which is directly connected according to said topology considered to a second router (rout₂), for a route exiting said autonomous system through an exit router (routₒᵤₜ) :
/a/ determining (41) a path between the second router and the exit router according to performance criteria based on router topology information, and determining (42) whether, for the route considered, the first router is located on said path between the second router and the exit router, and
/b/ announcing (43) the route to said second router if the first router is located on the path determined in step /a/.

2. Route broadcast method according to Claim 1, in which route broadcast sessions are established between the routers; and in which step /b/ is carried out via the route broadcast session established between the first and second routers.

3. Route broadcast method according to Claim 1, in which steps /a/ and /b/ are carried out when the router topology is modified.

4. Route broadcast method according to Claim 1, in which steps /a/ and /b/ carried out successively for each of the second routers connected to the first router according to the router topology.

5. Route broadcast method according to Claim 1, in which steps /a/ and /b/ are applied successively to each of the routers of the plurality of routers, which is considered as first router.

6. Route broadcast method according to Claim 1, in which the performance criteria are suitable for selecting the shortest path between the second router and the exit router.

7. Route broadcast method according to Claim 1, in which the router topology and respective costs of the links between the routers are obtained according to the link state IGP (Interior Gateway Protocol) protocol.

8. Router (80) in an autonomous system comprising a plurality of routers within a packet transmission network and a route exiting said autonomous system through an exit router;
said router being directly connected with a second router by a direct link according to a router topology; said router (80) comprising:
- a determination unit (81) suitable for determining, for said exit router, whether said router (80) belongs to a path between said other router and said exit router, said path being determined by said router (80) according to performance criteria based on router topology information, and
- a broadcast unit (82) suitable for announcing the route to said other router if said router (80) is located on the path determined by the determination unit.

9. Router according to Claim 8, additionally comprising:
- a route broadcast session management unit (83) suitable for establishing route broadcast sessions according to a routing protocol with the routers which are connected to it according to the router topology.

10. Router according to Claim 9, in which the route broadcast session management unit (83) is also suitable for managing the route broadcast sessions following modifications to the router topology.

11. Autonomous system comprising a plurality of routers within a packet transmission network; said routers being routers according to Claim 8.

12. Computer program including instructions for implementing the method according to Claim 1 when this program is executed by a processor.
